# EUROPEAN PATENT SPECIFICATION

(11) **EP 1 680 626 B1**
(45) Date of publication and mention of the grant of the patent: **15.04.2009**
(21) Application number: 03751544.2
(22) Date of filing: 14.10.2003
(51) Int. Cl.: F24F 7/08

(54) **VENTILATOR**
VENTILATOR
VENTILATEUR

(43) Date of publication of application: 19.07.2006
(73) Proprietor: LG Electronics, Inc., Seoul 150-010 (KR)
(72) Inventor: CHO, Min-Chul, 616-830 Busan (KR); SHIN, Soo-Yeon, Gimhae-Shi, 621-833 Kyungsangnam-Do (KR); LEE, Seonghwan, Changwon-Shi, 641-091 Kyungsangnam-Do (KR)
(74) Representative: Wunderlich, Rainer
(86) International application number: PCT/KR2003/002128
(87) International publication number: WO 2005/036066

(56) References cited:
- JP-A- 7 332 727
- JP-A- 62 172 131
- JP-A- 63 294 444

## Description

The present invention relates to a ventilator for ventilating an indoor space by externally discharging indoor air and internally sucking outdoor air.

### BACKGROUND ART

In general, the carbon dioxide content of air increases in a hermetically sealed space with the passage of time because of breathing of living objects, and has detrimental effects on breathing. Accordingly, a ventilator is used to exchange contaminated indoor air for fresh outdoor air especially in a narrow space where a number of people stay such as an office or vehicle.

The ventilator includes an air blower for forcibly blowing indoor air and outdoor air, and repeats a process of externally discharging contaminated indoor air and internally sucking fresh outdoor air.

However, when cooling and ventilating operations are performed indoors at the same time, cooled indoor air is exhausted and hot outdoor air is sucked. Thus, a temperature of indoor air is higher than a cooling temperature, to reduce cooling efficiency. In the case that heating and ventilating operations are simultaneously performed indoors, heated indoor air is exhausted and cooled outdoor air is sucked. As a result, the temperature of indoor air is lower than a heating temperature, to reduce heating efficiency.

Therefore, the ventilator further includes a heat exchanger for exchanging heat between indoor air and outdoor air.

JP-A-63294444 describes a ventilation device with full heat exchanger. The purpose of this device is to increase an amount of air in case of performing a cooling with open air to enable a sufficient cooling with the open air by a method wherein a barrel frame body is stored in a full heat exchanger, a full heat exchanger frame is laid out of the main body and air is passed within a barrel arranged in the barrel frame.

JP-A-62172131 discloses an air conditioning ventilation fan for duct to make utilization of thermal energy and to prevent the temperature of a motor from increasing by a method, wherein the thermal energy generated at a motor housing part is discharged into a room or outside the room. When the outside temperatures are cold, a first damper is opened to connect an indoor discharging port with a motor storing part, and a second damper is closed to shut off the communication between an outdoor discharging port and the motor storing part. In tum, when the outdoor temperatures are hot, the first damper is closed, the communication with the motor storing part is shut off, and a second damper is opened to connect the outdoor discharging port with the storing part.

JP-A-07332727 describes a heat exchanging ventilation device according to the preamble of claim 1 and 2. This device permits maintenance works of a motor for an air sending unit. The air sending units are arranged near the side unit with a posture, wherein motors are faced to the sides of a casing defining an inserting and an extracting port for an air sending unit. An operator can access the motor from a maintenance space. The maintenance works for the motors can be effected from the maintenance space.

In detail, according to Japanese Laid-Open Patent Application 11-287492 shown in Fig. 1, an outdoor air suction hole 4a for sucking outdoor air and an indoor air discharge hole 6b for discharging indoor air are formed on one surface of a rectangular casing 2, an outdoor air discharge hole 4b for discharging outdoor air and an indoor air suction hole 6a for sucking indoor air are formed on the other surface of the casing 2, a heat exchanger 8 for exchanging heat by forming passages for separately flowing indoor air and outdoor air is installed in the center of the casing 2 to cross the casing 2, and an air supply fan 10 and an air exhaust fan 20 are installed in both edges of the casing 2 to be positioned inside the outdoor air discharge hole 4b and the indoor air discharge hole 6b.

In addition, an air path for guiding outdoor air sucked from the outdoor air suction hole 4a to the heat exchanger 8 to be discharged to the outdoor air discharge hole 4b, and an air path for guiding indoor air sucked from the indoor air suction hole 6a to the heat exchanger 8 to be discharged to the indoor air discharge hole 6b are formed in the casing 2.

Here, the heat exchanger 8 is installed to be connected or disconnected through a checking hole 2a formed in the center of one surface of the casing 2.

Sirocco fans for sucking outdoor air or indoor air in the axial direction and discharging sucked air in the radius direction are used as the air supply fan 20 and the air exhaust fan 20. The air supply fan 10 and the air exhaust fan 20 are installed to be positioned inside fan housings 12 and 22, respectively. Motors 14 and 2 4 for d riving the air supply fan 10 a nd the air exhaust fan 2 0 are f ixedly installed in the fan housings 12 and 22, respectively.

The motor 14 for driving the air supply fan 10 is installed toward the indoor air suction hole 6a, and the motor 24 for driving the air exhaust fan 20 is installed toward the outdoor a ir suction hole 4a. Accordingly, the motors 14 and 24 are installed in the facing direction.

However, in the conventional ventilator, the motors 14 and 24 for driving the air supply fan 10 and the air exhaust fan 20 are installed in both edges of the casing 2 in the checking hole2a installation direction and the facing direction to the checking hole2a installation direction, respectively, so that an operator can disconnect merely the fans and motors installed in the checking hole2a installation direction through the checking hole 2a. It is thus difficult to examine and repair the air supply fan 10, the air exhaust fan 20 and the motors 14 and 24.

On the other hand, as disclosed in Japanese Laid-Open Patent Application 09-137984 shown in Figs. 2 and 3, an outdoor air suction hole 34a for sucking outdoor air and an indoor air discharge hole 3 6b for discharging indoor air are formed on one surface of a rectangular casing 32, an outdoor air discharge hole 34b for discharging outdoor air and an indoor air suction hole 36a for sucking indoor air are formed on the other surface of the casing 32, a heat exchanger 38 for forming passages for separately flowing outdoor air and indoor air is installed in the center of the casing 32 to cross the casing 32, and an air supply fan 40 for sucking outdoor air and an air exhaust fan 50 for discharging indoor air are installed in the center of one surface of the casing 32 and the center of the other surface of the casing 32, respectively.

In addition, partitioning units 37a and 37b for guiding outdoor air sucked from the outdoor air suction hole 34a to the heat exchanger 38, or guiding indoor air sucked from the indoor air suction hole 36a to the heat exchanger 38 are installed in the casing 32, and ducts 39a and 39b for guiding outdoor air passing through the heat exchanger 38 to be discharged to the outdoor air discharge hole 34b, or guiding indoor air passing through the heat exchanger 38 to be discharged to the indoor air discharge hole 36b are installed in the casing 32, to form air paths for separately flowing outdoor air and indoor air.

The h eat exchanger 38 is installed in the casing 32 to be connected or disconnected through a checking hole 32a formed in the center of one surface of the casing 32. The edges of the heat exchanger 38 are slidably fixed into rails 35 formed in both ends of the partitioning units 37a and 37b and the top and bottom inside surfaces of the casing 32.

Sirocco fans for sucking outdoor air or indoor air in the axial direction and discharging sucked air in the radius direction are used as the air supply fan 40 and the air exhaust fan 50. The air supply fan 40 and the air exhaust fan 50 are installed inside fan housings 42 and 52 connected to the ducts 39a and 39b, respectively. Motors 44 and 54 for driving the air supply fan 40 and the air exhaust fan 50 are fixedly installed in the fan housings 42 and 52, respectively.

Here, the motor 44 for driving the air supply fan 40 and the motor 54 for driving the air exhaust fan 50 are installed toward both side centers of the heat exchanger 38.

In the conventional ventilator, the motors 44 and 54 for driving the air supply fan 40 and the air exhaust fan 50 are positioned to face the heat exchanger 38 in both side centers of the casing 30. Accordingly, when an operator disconnects the motors 44 and 54 for respectively driving the air supply fan 40 and the air exhaust fan 50 through the checking hole 32a, the motors 44 and 54 are bumped into the rails 35 for connecting or disconnecting the heat exchanger 38, and thus not completely disconnected from the casing 32. It is thus difficult to examine and repair the air supply fan 40, the air exhaust fan 50 and the motors 44 and 54.

According to Japanese Laid-Open Patent Application 07-332727 shown in Fig. 4, an outdoor air suction hole 64a and an indoor air discharge hole 66b are formed on one surface of a casing 62, and an outdoor air discharge hole 64b and an indoor air suction hole 66a are formed on the facing surface of the casing 62. The outdoor air suction hole 64a and the indoor air suction hole 66a are formed to face each other, and the outdoor air discharge hole 64b and the indoor air discharge hole 66b are formed to face each other. A heat exchanger 68 for exchanging heat between outdoor air and indoor air is installed in the casing 62 to cross the casing 62.

Here, air paths for flowing outdoor air sucked from the outdoor air suction hole 64a to one side of the heat exchanger 68 and indoor air discharged from one side of the heat exchanger 68 to the indoor air discharge hole 66b in different spaces, and flowing indoor air sucked from the indoor air suction hole 66a to the other side of the heat exchanger 68 and outdoor air discharged from the other side of the heat exchanger 68 to the outdoor air discharge hole 64b in different spaces are formed in the casing 62. An air supply fan 72 and a motor 74 for blowing outdoor air are installed inside the outdoor air discharge hole 64b, and an air exhaust fan 82 and a motor 84 for blowing indoor air are installed inside the indoor air discharge hole 66b.

Especially, a checking hole 62a is formed on one side surface of the casing 62 to check inside components, the heat exchanger 68 is installed to be slidably connected or disconnected through the checking hole 62a, and a pair of guide rails 78 and 88 for moving the motors 74 and 84 to the checking hole 62a to disconnect the motors 74 and 84 through the checking hole 62a for checking are installed in both sides of the heat exchanger 68.

Here, the air supply fan 72 is installed in a fan housing 71 formed inside the outdoor air discharge hole 64b for guiding air flow, the top and bottom edges of the fan housing 71 are installed to move to the checking hole 62a along the guide rail 78 of the outdoor air discharge hole64b side, and the motor 74 for driving the air supply fan 72 is fixed to the fan housing 71 by a motor supporting member 76.

Identically to the air supply fan 72, the air exhaust fan 82 is installed in a fan housing 81, the fan housing 81 is installed to move to the checking hole 62a along the guide rail 88 of the indoor air discharge hole 66b side, and the motor 84 for driving the air exhaust fan 82 is fixed to the fan housing 81 by a motor supporting member 86.

The guide rails 78 and 88 are formed to guide the top and bottom ends of the fan housings 71 and 81, vertically to the length direction of the heat exchanger 68.

On the other hand, the motors 74 and 84 are installed adjacently to one surface of the casing 62 where the checking hole 62a has been formed, to remove an unnecessary space of the casing 62 and reduce the whole size of the product.

In this ventilator, the guide rails 78 and 88 are installed in both sides of the heat exchanger 68 vertically to the heat exchanger 68, the fan housings 71 and 81 are installed to move along the guide rails 78 and 88, and the motors 74 and 84 fixed to the fan housings 71 and 81 are transferred to the checking hole 62a and disconnected. Accordingly, the operator can easily maintain and repair the motors 74 and 84. However, it is difficult to embody such a ventilator. Furthermore, the production cost is raised due to increase of the constitutional components. Even if the fan housings 71 and 81 are installed closely to the discharge holes 64b and 66b, air leakage increases without a special sealing process, to reduce air flow efficiency. As a whole, efficiency of the system decreases.

### DISCLOSURE OF THE INVENTION

An object of the present invention is to provide a ventilator which allows an operator to easily disconnect an air supply fan, an air exhaust fan and motors through a checking hole formed on one side surface of a casing and easily maintain and repair the fans and motors, by changing installation directions of the fans and motors without using additional components.

In order to achieve the above-described object of the invention, there is provided a ventilator according claim 1 and/or claim 2.

According to one aspect of the invention, the ventilator further includes fan housings having the air supply fan and the air exhaust fan inside to blow outdoor air or indoor air, wherein first orifice units are incorporated on the front surfaces of the fan housings, second orifice units are installed on the rear surfaces of the fan housings to be connected or disconnected, and motor supporting members for supporting the motors are fixedly installed in the second orifice units. The circumferences of the second orifice units are fixed to the rear opened surfaces of the fan housings by screws.

According to another aspect of the invention, the outdoor air discharge hole is formed in the center of one surface of the casing, the indoor air discharge hole is formed in the center of the facing surface of the casing, the indoor air suction hole is formed in one side of one surface of the casing, and the outdoor air suction hole is formed in the other side of the facing surface of the casing.

According to yet another aspect of the invention, the checking hole is formed in the center of one side surface of the casing adjacent to the outdoor air suction hole and the indoor air discharge hole, the air supply fan is installed inside the outdoor air discharge hole, and the air exhaust fan is installed inside the indoor air discharge hole.

According to get another aspect of the invention, the motor supporting members and the second orifice units are installed in parallel to the length direction of the heat exchanger, so that the heat exchanger can be connected or disconnected in the sliding connection or disconnection direction.

### BRIEF DESCRIPTION OF THE DRAWINGS

The present invention will become better understood with reference to the accompanying drawings which are given only by way of illustration and thus are not limitative of the present invention, wherein:

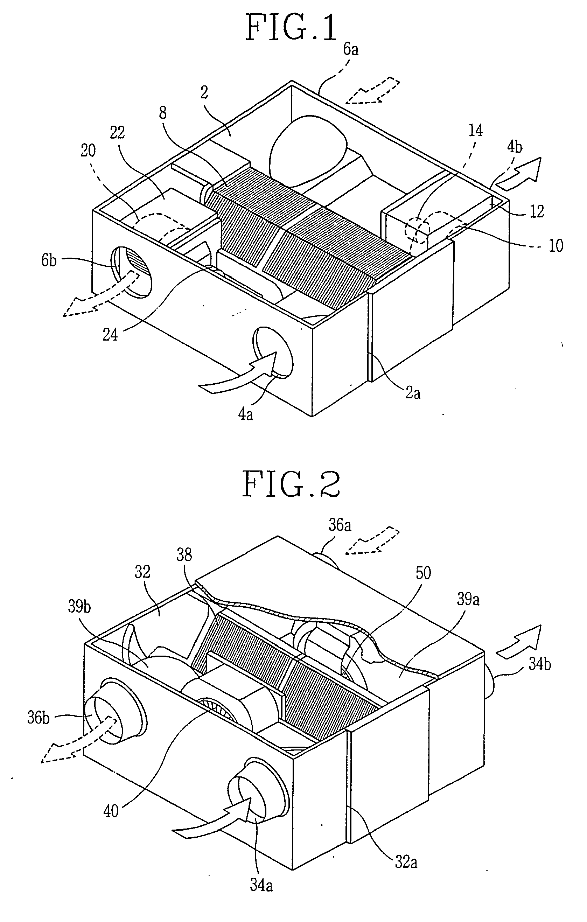

Fig. 1 is a perspective view illustrating one example of a conventional ventilator;
Fig. 2 is a perspective view illustrating another example of the conventional ventilator;

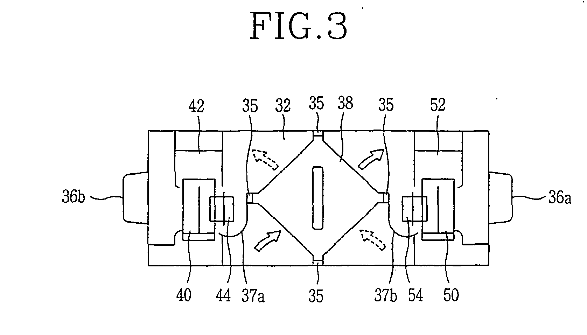

Fig. 3 is a cross-sectional view illustrating another example of the conventional ventilator;

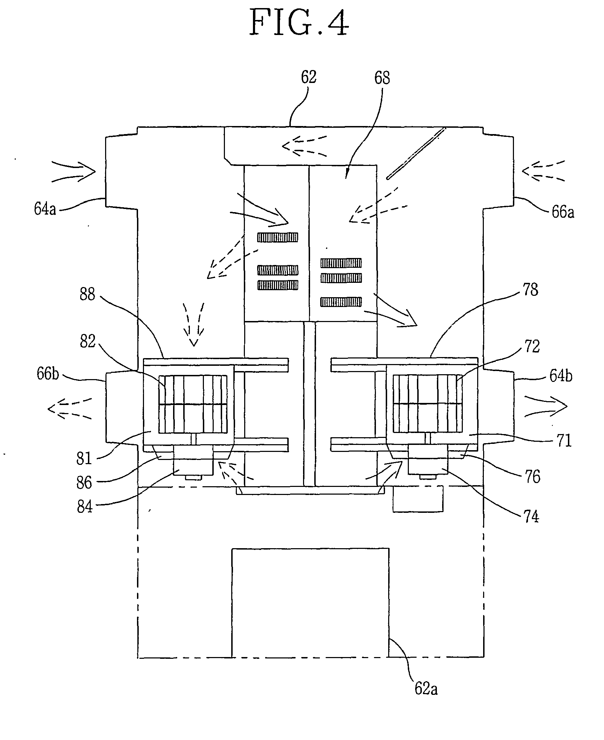

Fig. 4 is a plan view illustrating yet another example of the conventional ventilator;
Fig. 5 is a perspective view illustrating a ventilator in accordance with the present invention;
Fig. 6 is a plan view illustrating the ventilator in accordance with the present invention;
Fig. 7 is a cross-sectional view taken along line A-A of Fig. 6;
Fig. 8 is a cross-sectional view taken along line B-B of Fig. 6; and
Figs. 9 and 10 are perspective views illustrating disassembly of an air blowing apparatus of the ventilator in accordance with the present invention.

### BEST MODE FOR CARRYING OUT THE INVENTION

Preferred embodiments of the present invention will now be described in detail with reference to the accompanying drawings.

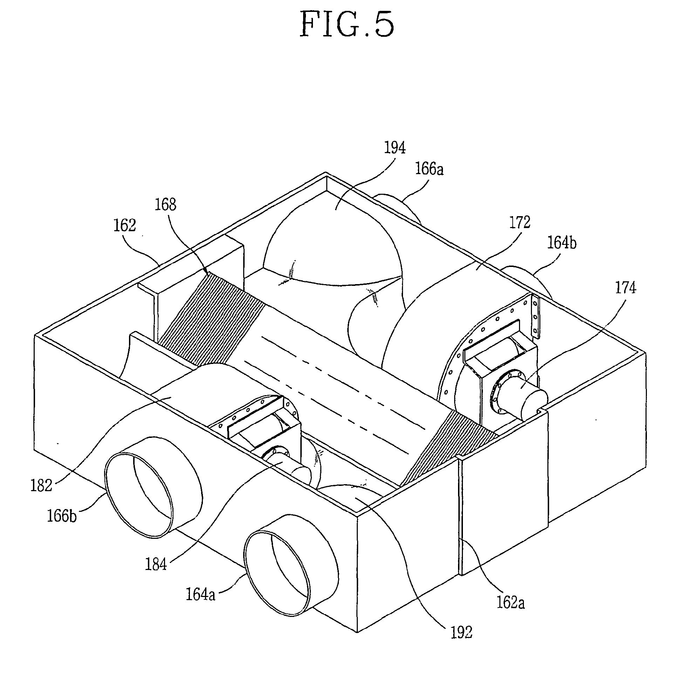

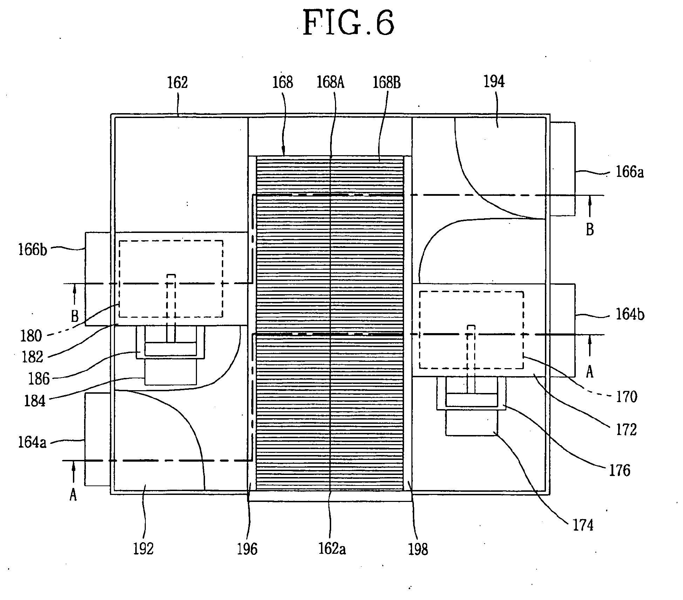

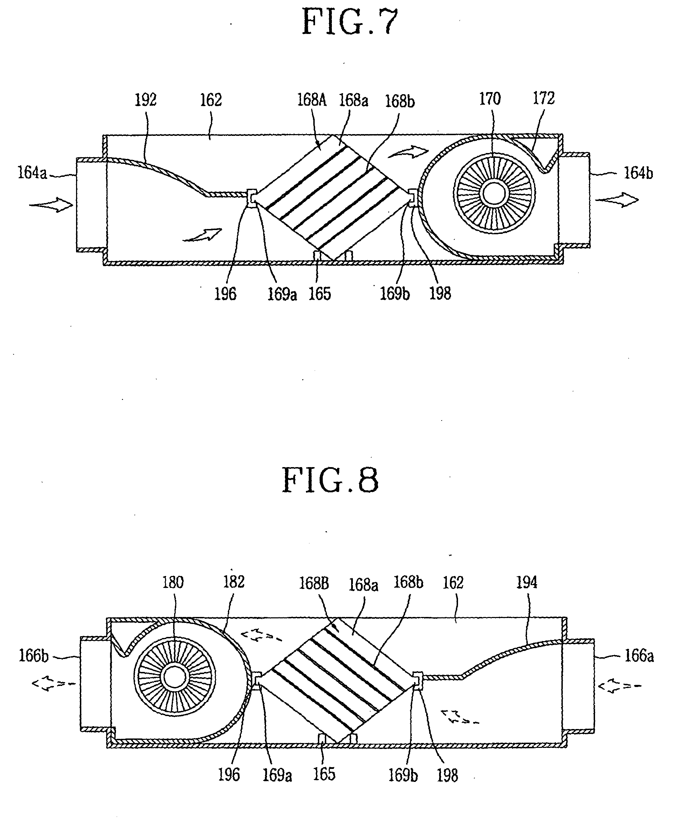

Figs. 5 and 6 are a perspective view and a plan view illustrating a ventilator in accordance with the present invention, Figs. 7 and 8 are cross-sectional views taken along lines A-A and B-B of Fig. 6, and Figs. 9 and 10 are perspective views illustrating disassembly of an air blowing apparatus of the ventilator in accordance with the present invention.

Referring to Figs. 5 and 6, the ventilator includes a rectangular casing 162 having a predetermined height, an outdoor air suction hole 164a for sucking outdoor air and an indoor air discharge hole 166b for discharging indoor air which are formed on one surface of the casing 162, an outdoor air discharge hole 164b for discharging outdoor air and an indoor air suction hole 166a for sucking indoor air which are formed on the facing surface to one surface of the casing 162 where the outdoor air suction hole 164a and the indoor air discharge hole 166b have been formed, a checking hole 162a formed on one side surface of the casing 162, for checking inside constitutional elements, an air supply fan 170 installed on passages for flowing outdoor air, for internally sucking outdoor air, an air exhaust fan 180 installed on passages for flowing indoor air, for externally discharging indoor air, and motors 174 and 184 installed toward one side surface of the casing 162 where the checking hole 162a has been formed with a predetermined connection or disconnection space for easy disconnection, for driving the air supply fan 170 and the air exhaust fan 180.

The ventilator further includes a heat exchanger 168 installed in the casing 162 to be slidably connected or disconnected through the checking hole 162a of the casing 162, for forming first and second passages for separately flowing outdoor air and indoor air, and exchanging heat between outdoor air and indoor air.

Here, the heat exchanger 168 is manufactured by stacking heat exchange units 168A and 168B including a plurality of guide ribs 168b on rectangular or hexagonal heat exchange films 168a. The heat exchange units 168A and 168B are divided into a first heat exchange unit 168A for flowing outdoor air and a second heat exchange unit 168B for flowing indoor air according to the installation directions of the guide ribs 168b on the heat exchange films 168a. The first and second heat exchange units 168A and 168B are alternately stacked.

Accordingly, the first passages for guiding air to be sucked from the bottom of one side surface and discharged to the top of the other side surface, and the second passages for guiding air to be sucked from the bottom of the other side surface and discharged to the top of one side surface are formed in the heat exchanger 168.

In the casing 162, an outdoor air passage guide 192 for guiding outdoor air sucked from the outdoor air suction hole 164a to the first passages of the heat exchanger 168 is installed in one side of the heat exchanger 168, and an indoor air passage guide 194 for guiding indoor air sucked from the indoor air suction hole 166a to the second passages of the heat exchanger 168 is installed in the other side of the heat exchanger 168.

In the outdoor air passage guide 192, a convex unit for guiding outdoor air from the outdoor air suction hole 164a to be sucked to the first passages of the heat exchanger 168 is upwardly protruded, and a concave unit for guiding indoor air from the second passages of the heat exchanger 168 to be discharged to the indoor air discharge hole 166b is downwardly caved. The convex unit is connected to the outdoor air suction hole 164a and the concave unit is connected to the indoor air discharge hole 166b.

In addition, in the indoor air passage guide 194, a convex unit for guiding indoor air from the indoor air suction hole 166a to be sucked to the second passages of the heat exchanger 168 is upwardly protruded, and a concave unit for guiding outdoor air from the first passages of the heat exchanger 168 to be discharged to the outdoor air discharge hole 164b is downwardly caved. The convex unit is connected to the indoor air suction hole 166a and the concave unit is connected to the outdoor air discharge hole 164b.

The checking hole 162a is formed in the center of one side surface of the casing 162 adjacent to the outdoor air suction hole 164a and the outdoor air discharge hole 164b, and the heat exchanger 168 is installed in the casing 162 to be connected or disconnected through the checking hole 162a. Here, guide protrusions 169a and 169b protruded long in the length direction in both sides of the heat exchanger 168 are guided to guide grooves 196 and 198 formed long in the length direction in the end of the outdoor air passage guide 192 and the end of the indoor air passage guide 194, so that the heat exchanger 168 can be slidably connected or disconnected. In addition, the top and bottom ends of the heat exchanger 168 are positioned in guide grooves 165 formed long in the length direction on the top and bottom inside surfaces of the casing 162, so that the heat exchanger 168 can be slidably connected or disconnected.

The guide protrusions 169a and 169b of the heat exchanger 168 are inserted into the guide grooves 196 and 198, and thus air leakage is prevented between the heat exchanger 168 and the outdoor air passage guide 192 and the indoor air passage guide 194. The top and bottom ends of the heat exchanger 168 are inserted into the guide grooves 165, and thus air leakage is prevented between the top and bottom ends of the heat exchanger 168 and the casing 162.

On the other hand, in order to evenly flow outdoor air or indoor air on the whole surface of the heat exchanger 168, the outdoor air discharge hole 164b is formed in the center of one surface of the casing 162, and the indoor air discharge hole 166b is formed in the center of the facing surface (the other surface) to the surface of the casing 162 where the outdoor air discharge hole 164b has been formed. The air supply fan 170 is installed in the concave unit of the indoor air passage guide 194 inside the outdoor air discharge hole 164b, and the air exhaust fan 180 is installed in the concave unit of the outdoor air passage guide 192 inside the indoor air discharge hole 166b.

Here, the indoor air suction hole 166a is close to one side of one surface of the casing 162, and the outdoor air suction hole 164a is close to the other side of the facing surface (the other surface) to the surface of the casing 162 where the indoor air suction hole 166a has been formed. Therefore, indoor air and outdoor air are sucked from the facing surfaces in the diagonal directions, and discharged to the centers, to lengthen the passages.

Accordingly, when the air supply fan 170 and the air exhaust fan 180 are operated, as shown in Fig. 7, outdoor air is internally sucked through the outdoor air suction hole 164a, the heat exchanger 168, the air supply fan 170 and the outdoor air discharge hole 164b, and as shown in Fig. 8, indoor air is externally discharged through the indoor air suction hole 166a, the heat exchanger 168, the air exhaust fan 180 and the indoor air discharge hole 166b. Indoor air and outdoor air flow in the heat exchanger 168 in the facing directions, to exchange heat.

Especially, sirocco fans for obtaining high air flow in a relatively small suction area are used as the air supply fan 170 and the air exhaust fan 180. The sirocco fans are installed in fan housings 172 and 182 to discharge air sucked in the axial direction to the radius direction.

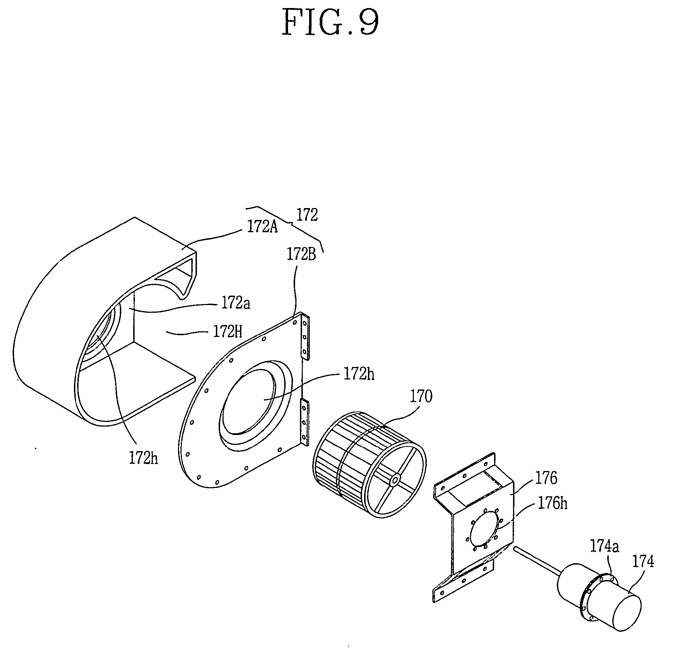

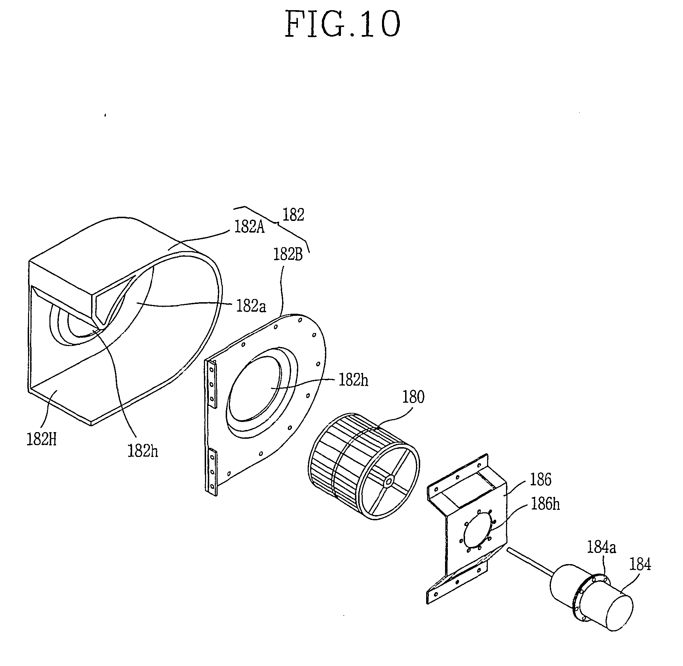

In detail, the fan housings 172 and 182 including the air supply fan 170 and the air exhaust fan 180 inside will now be explained with reference to Figs. 9 and 10. The fan housings 172 and 182 include first orifice units 172a and 182a having inlet holes 172h and 182h in their centers to guide air flow on the front surfaces, fan housing main bodies 172A and 182A having their rear surfaces opened, and second orifice units 172B and 182B being installed on the rear surfaces of the fan housing main bodies 172A and 182A to be connected or disconnected, and having inlet holes 172h and 182h in their centers to suck air.

Here, the fan housing main bodies 172A and 182A include outlet holes 172H and 182H linked to the outdoor air discharge hole 164b or the indoor air discharge hole 166b, so that outdoor or indoor air can be sucked in the axial direction through the inlet holes 172h and 182h of the first and second orifice units 172a and 182a and discharged in the radius direction to the outlet holes 172H and 182H.

Motor fixing members 176 and 186 having fixing holes 176h and 186h in their centers to fix motor fixing units 174a and 184a formed in the circumferences of the motors 174 and 184 are fixedly installed in the second orifice units 172B and 182B.

In the fan housing main bodies 172A and 182A, the circumferences of the outlet holes 172H and 182H are fixed to the outdoor air discharge hole 164b or the indoor air discharge hole 166b by screws, the circumferences of the second orifice units 172B and 182B are fixed to the rear surfaces of the fan housing main bodies 172A and 182A by screws, the top and bottom ends of the motor supporting members 176 and 186 are fixed to the second orifice units 172B and 182B by screws, and the motor fixing units 174a and 184a of the motors 174 and 184 are fixed to the motor supporting members 176 and 186 by screws.

The motors 174 and 184 are installed to have their rotation axes parallel to the length direction of the heat exchanger 168 with a predetermined connection or disconnection space in the length direction, so that the motors 174 and 184 can be easily connected or disconnected through the checking hole 162a in the length direction of the heat exchanger 168. That is, the motors 174 and 184 are installed to have a predetermined interval from the other adjacent component (for example, convex unit of the outdoor air passage guide 192, convex unit of the indoor air passage guide 194, or one side surface of the casing 162 where the checking hole 162a has been formed).

The assembly process of the air supply fan 170, the air exhaust fan 180, the fan housings 172 and 182 and the motors 174 and 184 will now be explained. The fan housing main bodies 172A and 182A are installed vertically to one surface of the casing 162 where the outdoor air discharge hole 164b has been formed, and the other surface of the casing 162 where the indoor air discharge hole 166b has been formed. Here, the rear surfaces of the fan housing main bodies 172A and 182A are installed toward one side surface of the casing 162 where the checking hole 162a has been formed.

Thereafter, the motors 174 and 184 are coupled to the motor supporting members 176 and 186 by screws, the second orifice units 172B and 182B are inserted into the rotation axes of the motors 174 and 184, the air supply fan 170 and the air exhaust fan 180 are connected to the ends of the rotation axes of the motors 174 and 184, and the motor supporting members 176 and 186 are fixed to the second orifice units 172B and 182B by screws, to compose fan assemblies.

The fan assemblies are assembled on the rear surfaces of the fan housing main bodies 172A and 182A to be connected or disconnected in the sliding connection or disconnection direction of the heat exchanger 168. The second orifice units 172B and 182B are fixed to the circumferences of the fan housing main bodies 172A and 182A by screws.

In the case that the fan assemblies are connected or disconnected to/from the fan housing main bodies 172A and 182A, the fan assemblies are not bumped into any one of the outdoor air passage guide 192, the indoor air passage guide 194 or one side surface of the casing 162 where the checking hole 162a has been formed because of the connection or disconnection space. The space can be obtained by changing the shape of the outdoor air passage guide 192 or the indoor air passage guide 194, or maintaining a predetermined interval between one side surface of the casing 162 where the checking hole 162a has been formed, the outdoor air suction hole 164a and the outdoor air discharge hole 164b.

As a result, when the operator examines or repairs the air supply fan 170, the air exhaust fan 180 and the motors 174 and 184, he/she disconnects the heat exchanger 168 through the checking hole 162a, separates the second orifice units 172B and 182B from the fan housing main bodies 172A and 182A, disconnects the fan assembly including the air supply fan 170 and motor 174 or the air exhaust fan 180 and motor 184 from the fan housing main bodies 172A and 182A, and takes the fan assembly from the casing 162 through the checking hole 162a at a time, thereby easily examining and repairing the components.

The ventilator was explained in detail on the basis of the embodiments and accompanying drawings of the present invention. However, it is understood that the present invention should not be limited to these preferred embodiments but various changes and modifications can be made by one skilled in the art within the scope of the present invention as hereinafter claimed.

## Claims

1. A ventilator, comprising
a casing (162) having an outdoor air suction hole (164a) for sucking outdoor air and an indoor air discharge hole (166b) for discharging indoor air on its one surface, an outdoor air discharge hole (164b) for discharging outdoor air and an indoor air suction hole (166a) for sucking indoor air on its facing surface, and a checking hole (162a) for checking inside components on its side surface;
a heat exchanger (168) installed in the center of the casing (162), for forming first and second passages for separately flowing outdoor air and indoor air, and exchanging heat;
an air supply fan (170) installed on the passages for flowing outdoor air, for internally sucking outdoor air;
an air exhaust fan (180).installed on the passages for flowing indoor air, for externally discharging indoor air; and
motors (174, 184) installed toward the surface of the casing (162) where the checking hole (162a) has been formed with a connection or disconnection space in the length direction of the heat exchanger (168), for driving the air supply fan (170) and the air exhaust fan (180), respectively,
whereby the heat exchanger (168) is installed in the casing (162) to be slidably connected or disconnected through in the lenght direction through the checking hole (162a),
wherein the motors (174, 184) are installed to have their rotation axes parallel to the length direction of the heat exchanger (168),
**characterized in that** an
outdoor air passage guide (192) for guiding outdoor air sucked from the outdoor air suction hole (164a) to the first passages of the heat exchanger (168), and guiding indoor air discharged from the second passages of the heat exchanger (168) to the indoor air discharge hole (166b) is formed in the casing (162), and
wherein the outdoor air passage guide (192) comprises a convex unit, a part of which connected to the outdoor air suction hole (164a) being upwardly protruded, and a concave unit, a part of which is connected to the indoor air discharge hole (166b) being downwardly caved, the air exhaust fan (180) and the motor (184) for driving the air exhaust fan (180) are installed in the concave unit, and the motor (184) for driving the air exhaust fan (180) maintains a predetermined interval from the convex unit of the outdoor air passage guide (192) for connection or disconnection.

2. A ventilator, comprising:
a casing (162) having an outdoor air suction hole (164a) for sucking outdoor air and an indoor air discharge hole (166b) for discharging indoor air on its one surface, an outdoor air discharge hole (164b) for discharging outdoor air and an indoor air suction hole (166a) for sucking indoor air on its facing surface, and a checking hole (162a) for checking inside components on its side surface;
a heat exchanger (168) installed in the center of the casing (162), for forming first and second passages for separately flowing outdoor air and indoor air, and exchanging heat;
an air supply fan (170) installed on the passages for flowing outdoor air, for internally sucking outdoor air;
an air exhaust fan (180) installed on the passages for flowing indoor air, for externally discharging indoor air; and
motors (174, 184) installed toward the surface of the casing (162) where the checking hole (162a) has been formed with a connection or disconnection space in the length direction of the heat exchanger (168), for driving the air supply fan (170) and the air exhaust fan (180), respectively,
whereby the heat exchanger (168) is installed in the casing (162) to be slidably connected or disconnected through the checking hole (162a) in the length direction,
wherein the motors (174, 184) are installed to have their rotation axes parallel to the length direction of the heat exchanger (168), **characterized in that** an indoor air passage guide (194) for guiding indoor air sucked from the indoor air suction hole (166a) to the second passages of the heat exchanger (168), and guiding indoor air discharged from the second passages of the heat exchanger (168) to the indoor air discharge hole (166b) is formed in the casing (162), and
the indoor air passage guide (194) comprises a convex unit, a part of which connected to the indoor air suction hole (166a) being upwardly protruded, and a concave unit, a part of which connected to the outdoor air discharge hole (164b) being downwardly caved, the air supply fan (170) and the motor (174) for driving the air supply fan (170) are installed in the concave unit, and the motor (174) for driving the air supply fan (170) maintains a predetermined interval from said adjacent one side surface of the casing (162) for connection or disconnection.

3. The ventilator of claim 1 or 2,
further comprising fan housings having the air supply fan (170) and the air exhaust fan (180) inside to blow outdoor air or indoor air,
wherein first orifice units (172a, 182a) are incorporated on the front surfaces of the fan housings (172, 182), second orifice units (172b, 182b) are installed on the rear surfaces of the fan housings (172, 182) to be connected or disconnected,
and motor supporting members (176, 186) for supporting the motors (174, 184) are fixedly installed in the second orifice units (172b, 182b).

4. The ventilator of claim 3,
wherein circumferences of the second orifice units (172b, 182b) are fixed to the rear opened surfaces of the fan housings (172, 182) by screws.

5. The ventilator of claim 3,
wherein the outdoor air discharge hole (164b) is formed in the center of one surface of the casing (162), and the indoor air discharge hole (166b) is formed in the center of the facing surface of the casing (162).

6. The ventilator of claim 5,
wherein the indoor air suction hole (166a) is formed in one side of one surface of the casing (162), and the outdoor air suction hole (164a) is formed in the other side of the facing surface of the casing (162).

7. The ventilator of claim 6,
wherein the checking hole (162a) is formed in the center of one side surface of the casing (162) adjacent to the outdoor air suction hole (164a) and the indoor air discharge hole (166b).

8. The ventilator of claim 1 or 2,
wherein the air supply fan (170) is installed inside the outdoor air discharge hole (164b), and the air exhaust fan (180) is installed inside the indoor air discharge hole (166b).

9. The ventilator of claim 7,
wherein the motor supporting members (176, 186) and the second orifice units (172b, 182b) are installed in parallel to the length direction of the heat exchanger (168), so that the heat exchanger (168) can be connected or disconnected in the sliding connection or disconnection direction.

## Patentansprüche

1. Ventilator, mit
einem Gehäuse (162) mit einem Außenluftansaugloch (164a) zum Ansaugen von Außenluft und einem Innenluftauslassloch (166b) zum Austragen von Innenluft auf dessen einer Oberfläche, einem Außenluftauslassloch (164b) zum Austragen von Außenluft und einem Innenluftansaugloch (166a) zum Ansaugen von Innenluft auf dessen gegenüberliegender Oberfläche, und einem Kontrollloch (162a) zum Überprüfen innerer Bauteile auf dessen seitlicher Oberfläche;
einem Wärmetauscher (168), der in dem Zentrum des Gehäuses (162) eingebaut ist zum Ausbilden erster und zweiter Durchgänge zum getrennten Strömen von Außenluft und Innenluft, und zum Austauschen von Wärme;
einem Luftzufuhrventilator (170), der auf den Durchgängen zum Strömen von Außenluft eingebaut ist, um innen Außenluft anzusaugen;
einem Luftausblasventilator (180), der auf den Durchgängen zum Strömen von Innenluft eingebaut ist, um außen Innenluft auszutragen; und
Motoren (174, 184), die in Richtung der Oberfläche des Gehäuses (162) eingebaut sind, wo das Kontrollloch (162a) mit einem Verbindungs- oder Trennraum in der Längsrichtung des Wärmetauschers (168) ausgebildet ist, um den Luftzufuhrventilator (170) und den Luftausblasventilator (180) anzutreiben, wodurch der Wärmetauscher (168) in dem Gehäuse (162) eingebaut ist, um in der Längsrichtung durch das Kontrollloch (162a) gleitend verbunden oder abgetrennt zu sein, wobei die Motoren (174, 184) so eingebaut sind, dass ihre Rotationsachsen parallel zu der Längsrichtung des Wärmetauschers (168) angeordnet sind,
**dadurch gekennzeichnet, dass**
eine Außenluftdurchgangsführung (192) zum Leiten von Außenluft, die von dem Außenluftansaugloch (164a) angesaugt ist, zu den ersten Durchgängen des Wärmetauschers (168) und zum Leiten von Innenluft, die von den zweiten Durchgängen des Wärmetauschers (168) ausgetragen ist, zu dem Innenluftauslassloch (166b), in dem Gehäuse (162) ausgebildet ist, und
wobei die Außenluftdurchgangsführung (192) eine konvexe Einheit, wovon ein Teil mit dem Außenluftansaugloch (164a), das nach oben vorsteht, verbunden ist, und eine konkave Einheit, wovon ein Teil mit dem Innenluftauslassloch (166b), das nach unten ausgehöhlt ist, verbunden ist, aufweist, und der Luftausblasventilator (180) und der Motor (184) zum Antreiben des Luftausblasventilators (180) in der konkaven Einheit eingebaut sind, und der Motor (184) zum Antreiben des Luftausblasventilators (180) einen vorbestimmten Abstand von der konvexen Einheit der Außenluftdurchgangsführung (192) zum Verbinden oder Trennen einhält.

2. Ventilator, mit:
einem Gehäuse (162) mit einem Außenluftansaugloch (164a) zum Ansaugen von Außenluft und einem Innenluftauslassloch (166b) zum Austragen von Innenluft auf dessen einer Oberfläche, einem Außenluftauslassloch (164b) zum Austragen von Außenluft und einem Innenluftansaugloch (166a) zum Ansaugen von Innenluft auf dessen gegenüberliegender Oberfläche und einem Kontrollloch (162a) zum Überprüfen innerer Bauteile auf dessen seitlicher Oberfläche;
einem Wärmetauscher (168), der in dem Zentrum des Gehäuses (162) eingebaut ist, zum Ausbilden erster und zweiter Durchgänge zum getrennten Strömen von Außenluft und Innenluft, und zum Austauschen von Wärme;
einem Luftzufuhrventilator (170), der auf den Durchgängen zum Strömen von Außenluft eingebaut ist, um innen Außenluft anzusaugen;
einem Luftausblasventilator (180), der auf den Durchgängen zum Strömen von Innenluft eingebaut ist, um außen Innenluft auszutragen; und
Motoren (174, 184), die in Richtung der Oberfläche des Gehäuses (162) eingebaut sind, wo das Kontrollloch (162a) mit einem Verbindungs- oder Trennraum in der Längsrichtung des Wärmetauschers (168) ausgebildet ist, um den Luftzufuhrventilator (170) und den Luftausblasventilator (180) anzutreiben, wodurch der Wärmetauscher (168) in dem Gehäuse (162) eingebaut ist, um in der Längsrichtung durch das Kontrollloch (162a) gleitend verbunden zu sein,
wobei die Motoren (174, 184) so eingebaut sind, dass ihre Rotationsachsen parallel zu der Längsrichtung des Wärmetauschers (168) angeordnet sind,
**dadurch gekennzeichnet, dass**
eine Innenluftdurchgangsführung (194) zum Leiten von Innenluft, die von dem Innenluftansaugloch (166a) angesaugt ist, zu den zweiten Durchgängen des Wärmetauschers (168), und zum Leiten von Innenluft, die von den zweiten Durchgängen des Wärmetauschers (168) ausgetragen ist, zum Innenluftaustragsloch (166b), in dem Gehäuse (162) ausgebildet ist, und
die Innenluftdurchgangsführung (194) eine konvexe Einheit, wovon ein Teil mit dem Innenluftansaugloch (166a), das nach oben vorsteht, verbunden ist, und
eine konkave Einheit, wovon ein Teil mit dem Außenluftauslassloch (164b), das nach unten ausgehöhlt ist, verbunden ist, aufweist, und der Luftzufuhrventilator (170) und der Motor (174) zum Antreiben des Luftzufuhrventilators (170) in der konkaven Einheit eingebaut sind, und der Motor (174) zum Antreiben des Luftzufuhrventilators (170) einen vorbestimmten Abstand von der benachbarten einen seitlichen Oberfläche des Gehäuses (162) zum Verbinden oder Trennen einhält.

3. Ventilator nach Anspruch 1 oder 2,
ferner mit Ventilatorgehäusen, die innerhalb den Luftzufuhrventilator (170) und den Luftausblasventilator (180) aufweisen, um Außenluft oder Innenluft zu blasen,
wobei erste Öffnungseinheiten (172a, 182a) auf den vorderen Oberflächen der Ventilatorgehäuse (172, 182) enthalten sind, und zweite Öffnungseinheiten (172b, 182b) auf den hinteren Oberflächen der Ventilatorgehäuse (172, 182) eingebaut sind, um verbunden oder getrennt zu werden, und Motortrageglieder (176, 186) zum Tragen der Motoren (174, 184) fest in den zweiten Öffnungseinheiten (172b, 182b) eingebaut sind.

4. Ventilator nach Anspruch 3,
wobei Umfänge der zweiten Öffnungseinheiten (172b, 182b) an den hinteren geöffneten Oberflächen der Ventilatorgehäuse (172, 182) durch Schrauben befestigt sind.

5. Ventilator nach Anspruch 3,
wobei das Außenluftauslassloch (164b) in dem Zentrum einer Oberfläche des Gehäuses (162) ausgebildet ist, und das Innenluftauslassloch (166b) in dem Zentrum der gegenüberliegenden Oberfläche des Gehäuses (162) ausgebildet ist.

6. Ventilator nach Anspruch 5,
wobei das Innenluftansaugloch (166a) in einer Seite von einer Oberfläche des Gehäuses (162) ausgebildet ist, und das Außenluftansaugloch (164a) in der anderen Seite der gegenüberliegenden Oberfläche des Gehäuses (162) ausgebildet ist.

7. Ventilator nach Anspruch 6,
wobei das Kontrollloch (162a) in dem Zentrum einer Seitenoberiläche des Gehäuses (162) benachbart zu dem Außenluftansaugloch (164a) und dem Innenluftauslassloch (166b) ausgebildet ist.

8. Ventilator nach Anspruch 1 oder 2,
wobei der Luftzufuhrventilator (170) innerhalb des Außenluftauslassloches (164b) eingebaut ist, und der Luftausblasventilator (180) innerhalb des Innenluftauslassloches (166b) eingebaut ist.

9. Ventilator nach Anspruch 7,
wobei die Motortrageglieder (176, 186) und die zweiten Öffnungseinheiten (172b, 182b) parallel zu der Längsrichtung des Wärmetauschers (168) eingebaut sind, so dass der Wärmetauscher (168) in der gleitenden Verbindungs- oder Trennrichtung verbunden oder getrennt werden kann.

## Revendications

1. Ventilateur comprenant :
un boîtier (162) comportant un trou (164a) d'aspiration d'air extérieur pour aspirer de l'air extérieur et un trou (166b) de refoulement de l'air intérieur sur sa première surface, un trou (164b) de refoulement d'air extérieur et un trou (166a) d'aspiration d'air intérieur pour aspirer de l'air intérieur sur sa surface opposée, et, sur sa surface latérale, un trou de contrôle (162a) pour contrôler les composants intérieurs ;
un échangeur de chaleur (168) installé au centre du boîtier (162), destiné à former des premiers et deuxièmes passages pour un écoulement séparé de l'air extérieur et de l'air intérieur, et pour un échange thermique ;
un ventilateur (170) d'alimentation en air installé sur les passages pour l'écoulement de l'air extérieur, destiné à aspirer à l'intérieur de l'air extérieur ;
un ventilateur (180) d'extraction d'air installé sur les passages pour l'écoulement de l'air intérieur, destiné à évacuer à l'extérieur l'air intérieur ; et
des moteurs (174, 184) installés vers la surface du boîtier (162) où a été formé le trou de contrôle (162a), avec un espace pour la connexion et la déconnexion, dans le sens de la longueur, de l'échangeur de chaleur (168), moteurs destinés respectivement à l'entraînement du ventilateur (170) d'alimentation en air et au ventilateur (180) d'extraction d'air,
dans lequel l'échangeur de chaleur (168) est installé dans le boîtier (162) de manière à être connecté ou déconnecté par glissement, dans le sens longitudinal, via le trou de contrôle,
dans lequel les moteurs (174, 184) sont installés de façon que leurs axes de rotation soient parallèles au sens longitudinal de l'échangeur de chaleur (168),
***caractérisé en ce que***
un guidage (192) de passage de l'air extérieur destiné à guider l'air extérieur aspiré depuis le trou (164a) d'aspiration d'air extérieur jusqu'aux premiers passages de l'échangeur de chaleur (168), et à guider l'air intérieur refoulé des deuxièmes passages de l'échangeur de chaleur (168) jusqu'au trou (166b) de refoulement de l'air intérieur, est formé dans le boîtier (162), et
dans lequel le guidage (192) de passage de l'air extérieur comprend une unité convexe, dont une partie raccordée au trou (164a) d'aspiration d'air extérieur est en saillie vers le haut, et une unité concave, dont une partie est raccordée au trou (166b) de refoulement de l'air intérieur en étant infléchie vers le bas, le ventilateur (180) d'extraction d'air et le moteur (184) pour entraîner le ventilateur (180) d'extraction d'air sont installés dans l'unité concave, et le moteur (184) pour entraîner le ventilateur (180) d'extraction d'air conserve un intervalle prédéterminé avec l'unité convexe du guidage (192) de passage de l'air extérieur pour la connexion ou la déconnexion.

2. Ventilateur comprenant :
un boîtier (162) comportant un trou (164a) d'aspiration d'air extérieur pour aspirer de l'air extérieur et un trou (166b) de refoulement de l'air intérieur sur sa première surface, un trou (164b) de refoulement d'air extérieur et un trou (166a) d'aspiration d'air intérieur pour aspirer de l'air intérieur sur sa surface opposée, et, sur sa surface latérale, un trou de contrôle (162a) pour contrôler les composants intérieurs ;
un échangeur de chaleur (168) installé au centre du boîtier (162), destiné à former des premiers et deuxièmes passages pour un écoulement séparé de l'air extérieur et de l'air intérieur, et pour un échange thermique ;
un ventilateur (170) d'alimentation en air installé sur les passages pour l'écoulement de l'air extérieur, destiné à aspirer à l'intérieur de l'air extérieur ;
un ventilateur (180) d'extraction d'air installé sur les passages pour l'écoulement de l'air intérieur, destiné à évacuer à l'extérieur l'air intérieur ; et
des moteurs (174, 184) installés vers la surface du boîtier (162) où a été formé le trou de contrôle (162a), avec un espace pour la connexion et la déconnexion, dans le sens de la longueur, de l'échangeur de chaleur (168), moteurs destinés respectivement à l'entraînement du ventilateur (170) d'alimentation en air et au ventilateur (180) d'extraction d'air,
dans lequel l'échangeur de chaleur (168) est installé dans le boîtier (162) de manière à être connecté ou déconnecté par glissement, dans le sens longitudinal, via le trou de contrôle,
dans lequel les moteurs (174, 184) sont installés de façon que leurs axes de rotation soient parallèles au sens longitudinal de l'échangeur de chaleur (168),
***caractérisé en ce que***
un guidage (194) de passage de l'air intérieur destiné à guider l'air intérieur aspiré depuis le trou (166a) d'aspiration d'air intérieur jusqu'aux deuxièmes passages de l'échangeur de chaleur (168), et à guider l'air intérieur refoulé des deuxièmes passages de l'échangeur de chaleur (168) jusqu'au trou (166b) de refoulement de l'air intérieur, est formé dans le boîtier (162), et
dans lequel le guidage (194) de passage de l'air intérieur comprend une unité convexe, dont une partie raccordée au trou (166a) d'aspiration d'air intérieur est en saillie vers le haut, et une unité concave, dont une partie raccordée au trou (164b) de refoulement de l'air extérieur est infléchie vers le bas, le ventilateur (170) d'alimentation en air et le moteur (174) pour entraîner le ventilateur (170) d'alimentation en air sont installés dans l'unité concave, et le moteur (174) pour entraîner le ventilateur (170) d'alimentation en air conserve un intervalle prédéterminé avec ladite première surface adjacente latérale du boîtier (162) pour la connexion et la déconnexion.

3. Ventilateur selon la revendication 1 ou 2,
comprenant en outre des enveloppes de ventilateur avec le ventilateur (170) d'alimentation en air et le ventilateur (180) d'extraction d'air à l'intérieur pour souffler de l'air extérieur ou de l'air intérieur,
dans lequel des premières unités d'orifice (172a, 182a) sont incorporées sur les surfaces avant des enveloppes (172, 182) des ventilateurs, des deuxièmes unités d'orifice (172b, 182b) sont installées sur les surfaces arrière des enveloppes (172, 182) des ventilateurs à connecter ou déconnecter, et des éléments de support (176, 186) des moteurs destinés à supporter les moteurs (174, 184) sont installés de manière fixe dans les deuxièmes unités d'orifice (172b, 182b).

4. Ventilateur selon la revendication 3, dans lequel les circonférences des deuxièmes unités d'orifice (172b, 182b) sont fixées aux surfaces ouvertes arrière des enveloppes (172, 182) des ventilateurs par des vis.

5. Ventilateur selon la revendication 3, dans lequel le trou (164b) de refoulement d'air extérieur est formé au centre d'une première surface du boîtier (162), et le trou (166b) de refoulement de l'air intérieur est formé au centre de la surface du boîtier (162) située en vis-à-vis.

6. Ventilateur selon la revendication 5, dans lequel le trou (166a) d'aspiration de l'air intérieur est formé sur un côté d'une surface du boîtier (162), et le trou (164a) d'aspiration d'air extérieur est formé sur l'autre côté de la surface du boîtier (162) située en vis-à-vis.

7. Ventilateur selon la revendication 6, dans lequel le trou de contrôle (162a) est formé au centre d'une surface latérale du boîtier (162) adjacente au trou (164a) d'aspiration d'air extérieur et au trou (166b) de refoulement de l'air intérieur.

8. Ventilateur selon la revendication 1 ou 2, dans lequel le ventilateur (170) d'alimentation en air est installé à l'intérieur du trou (164b) de refoulement de l'air extérieur, et le ventilateur (180) d'extraction d'air est installé à l'intérieur du trou (166b) de refoulement de l'air intérieur.

9. Ventilateur selon la revendication 7, dans lequel les éléments (176, 186) de support du moteur et les deuxièmes unités d'orifice (172b, 182b) sont installés parallèlement au sens de la longueur de l'échangeur de chaleur (168), de telle sorte que l'échangeur de chaleur (168) puisse être connecté ou déconnecté dans le sens de connexion ou de déconnexion par glissement.
